# EUROPÄISCHE PATENTANMELDUNG

(11) **EP 1 961 987 A1**
(43) Veröffentlichungstag der Anmeldung: **27.08.2008**
(21) Anmeldenummer: 08101035.7
(22) Anmeldetag: 29.01.2008
(51) Int. Cl.: F16D 65/12

(54) **Fahrradbremsscheibe**

(30) Priorität: 23.02.2007 DE 102007009480
(71) Anmelder: SGL Carbon AG, 65203 Wiesbaden (DE)
(72) Erfinder: Danzer, Martin, 86559 Adelzhausen (DE); Stühler, Gregor, 86405 Meitingen (DE); Moser, Harald, 86405, Meitingen (DE)

(57) **Zusammenfassung**

Die vorliegende Erfindung betrifft eine Fahrradbremsscheibe (1), die starr mit der Nabe verbunden ist und die mit einem am Fahrrad befestigten Bremssattel in einen Reibeingriff bringbar ist, wobei wobei sie einen inneren ringförmigen Bereich (3), der mit der Nabe form- und kraftschlüssig verbunden ist, und einen äußeren ringförmigen Bereich (2) aufweist, wobei der innere und der äußere ringförmige Bereich (2, 3) durch Stege (5) verbunden sind und die Fahrradbremsscheibe (1) komplett aus Kompositmaterial bestehend aus Silizium infiltrierten Kohlenstofffaser-Verbundmaterial aus einer Gewebestruktur, bestehend aus Endlosfasern mit einer Phasenverteilung von >60% C und 20-30% SiC, gefertigt ist.

## Beschreibung

Die vorliegende Erfindung betrifft eine Fahrradbremsscheibe, die starr mit der Nabe verbunden ist und die mit einem am Fahrrad befestigten Bremssattel in einen Reibeingriff bringbar ist.

Im Prinzip bestehen bekannte Bremsscheiben aus einem Bremsband und einem Mittelteil. Das Bremsband bildet die Fläche, auf der die Bremsbeläge zum Bremsen eine Reibkraft ausüben. Die Fläche des Bremsbands und der Durchmesser der Scheibe ist auf die Masse des abzubremsenden Fahrzeugs abgestimmt. Das Mittelteil der Bremsscheibe dient der Befestigung an der Nabe des abzubremsenden Rads. Es weist in der Regel eine große Bohrung auf, durch die beispielsweise beim Fahrrad die Achse des abzubremsenden Rads tritt, sowie einige kreisförmig um die große Bohrung angeordnete kleine Bohrungen, durch die in der Regel Schrauben zur Befestigung der Bremsscheibe an der Nabe treten. Alternativ kann die Bremsscheibe auch wie in der EP 1 288 117 A2 angegeben an der Nabe befestigt werden.

Bei den bekannten Bremsscheiben für Fahrräder ist das Bremsband mit dem Mittelteil über Streben verbunden. Dabei kann die Bremsscheibe einstückig oder mehrteilig ausgeführt sein, wobei die einzelnen Teile vorzugsweise durch Nietverbindungen miteinander verbunden sind. Das Bremsband, die Streben und das Mittelteil sind vorzugsweise aus Stahlblech oder einer Leichtmetall-Legierung ausgebildet. Bei Fahrradbremsscheiben ist das Stahlblech 1 bis 4 mm, in der Regel 2 mm stark.

Ein Grossteil der beim Bremsen erzeugten Wärme dringt in die Scheibe ein. Ein übermäßiger Temperaturanstieg der Bremsscheibe bewirkt eine Überhitzung des Bremsbelags. Dies verursacht eine Schädigung des Materials (Verglasung der Oberfläche) und das Aufheizen der Bremsflüssigkeit (Gefahr der Dampfblasenbildung). Bei Fahrradbremsen sind die Bremsleitungen zudem im Gegensatz zum Personenkraftwagen aus nicht so hitzbeständigem Material ausgebildet, so dass es im Extremfall zum Lockern oder Lösen einer Bremsleitung an dem Bremssattel kommen kann. Daher muss die Wärme von der Bremsscheibe möglichst schnell wieder abgeführt werden.

Bei Fahrrädern haben sich wegen des geringen zur Verfügung stehenden axialen Bauraums und des Wunsches nach geringem Gewicht einteilige oder mehrteilige Bremsscheiben aus Stahlblech durchgesetzt, bei denen das Bremsband mit dem Mittelteil über Streben verbunden ist. Aufgrund der im Vergleich zum Personenkraftwagen relativ großen Verwindungen zwischen der Befestigung des Bremssattels und der Befestigung der Bremsscheibe ist es in der Regel notwendig, ein relativ flexibles Material einzusetzen. Die damit verbundenen Nachteile der axialen Flexibilität als auch die Neigung zu hörbaren Eigenschwingungen (Quietschen), die vor allem bei dünnen Bremsscheiben auftreten, werden dabei in Kauf genommen.
Die bekannten Bremsscheiben für Fahrräder haben den Nachteil, dass sie eine geringe Verschleißbeständigkeit und ein relativ hohes spezifisches Gewicht besitzen. Weiterhin ist die Wärmeableitung dadurch, dass die Fahrradbremsscheiben keinen nennenswerten Luftströmungen erzeugen und die Kühlung vor allem durch den Fahrtwind erfolgen muss, durch die Wärmeleitfähigkeit des eingesetzten Materials limitiert. Bei normalen Fahrbedingungen ist diese Kühlung wegen des geringen abzubremsenden Gewichts hinreichend. Bei langen Abfahrten insbesondere in steilem Gelände können jedoch Probleme mit der Überhitzung der Bremsscheibe auftreten. Daher besteht ein Bedarf für eine Fahrradbremsscheibe, die die Nachteile des Standes der Technik vermindert.

Der Erfindung liegt daher die Aufgabe zugrunde, eine Fahrradbremsscheibe anzugeben, die eine hohe Verschleißbeständigkeit, ein relativ geringes spezifisches Gewicht und eine gute Wärmeleitfähigkeit besitzt.

Die Aufgabe der Erfindung wird mit einer Fahrradbremsscheibe gemäß Anspruch 1 gelöst. Vorteilhafte Ausgestaltungen der Erfindung sind in den abhängigen Ansprüchen angegeben.

Erfindungsgemäß ist Fahrradbremsscheibe 1 starr mit der Nabe verbunden und mit einem am Fahrrad befestigten Bremssattel in einen Reibeingriff bringbar, wobei sie einen inneren ringförmigen Bereich (Mittelteil) 3, der mit der Nabe form- und kraftschlüssig verbunden ist, und einen äußeren ringförmigen Bereich (Bremsband) 2 aufweist, wobei der innere und der äußere ringförmige Bereich 2, 3 durch Stege 5 verbunden sind und die Fahrradbremsscheibe 1 komplett aus Kompositmaterial bestehend aus Silizium infiltrierten Kohlenstofffaser-Verbundmaterial gefertigt ist.

Das Kompositmaterial der Fahrradbremsscheibe besteht vorzugsweise aus Endlosfasern mit einer Phasenverteilung von >60% Kohlenstoff (C) und 20-30% Siliziumcarbid (SiC).

Vorzugsweise sind bei der Fahrradbremsscheibe 1 mindestens drei äquidistant angeordnete Stege 5 vorhanden, wobei die äquidistant angeordnete Stege 5 in besonders bevorzugter Weise in tangentialer Orientierung zur Nabenöffnung angeordnet sind.

Die Fahrradbremsscheibe kann in differentiell oder integral Bauweise dargestellt werden, das bedeutet, dass das Bremsband (2) bestehend aus faserverstärkter Keramik auch in differentieller Bauweise mit der Nabe verbunden werden kann, um Eigenschaften der gesamten Bremsscheibe hinsichtlich leistungs- und Komfortansprüchen anzupassen.

Weiterhin sind bei der Fahrradbremsscheibe 1 die Stege 5 im Übergangsbereich zum Mittelteil 3 und im Übergangsbereich zum Bremsband 2 vorzugsweise verbreitert.

Gemäß einer Ausführung der Erfindung weist das Bremsband 2 der Fahrradbremsscheibe 1 auf mindestens einer Kreisbahn angeordnete Öffnungen 6 auf. In einer vorteilhaften Ausgestaltung sind die Öffnungen 6 auf zwei Kreisbahnen des Bremsbandes 2 angeordnet, wobei die Öffnungen 6 die gesamte Belagbreite im Laufe einer Umdrehung abdecken.

Vorzugsweise ist das Bremsband 2 der Fahrradbremsscheibe 1 mit einer beidseitigen Reibschicht bestehend aus Siliziumcarbid (SiC) versehen.

Die erfindungsgemäße Fahrradbremsscheibe 1 besitzt vorzugsweise eine Dicke von 1,5 bis 2,5 mm.

Die Erfindung wird anhand des in der Figur gezeigten Ausführungsbeispiels im folgenden beschrieben.

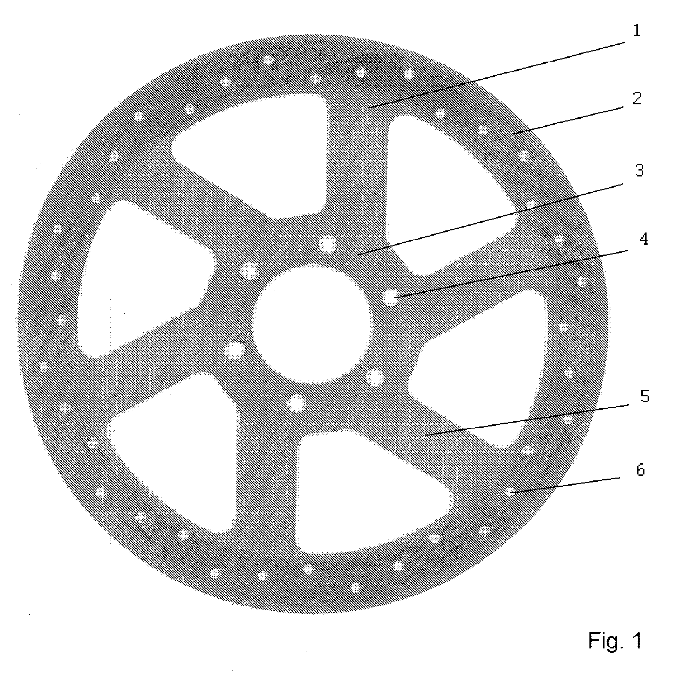

Fig. 1 zeigt eine Seitenansicht der Bremsscheibe.

Im Zusammenhang mit der Figur 1 wird im folgenden vor allem die Bremsscheibe beschrieben. Die übrigen Komponenten einer Scheibenbremse wie beispielsweise der Bremssattel sowie den Bremshebel und den Bremssattel sind dem Fachmann bekannt.
Fig. 1 zeigt eine Seitenansicht der Bremsscheibe 1, d.h. die Bremsscheibe ist so dargestellt, wie sie im montierten Zustand von der Seite des Fahrrads gesehen wird. Die Bremsscheibe 1 besteht aus einem 2 mm starken Kohlenstofffaser-Prepreg-Gelege, das mit Silizium infiltriert wurde. Die Bremsscheibe 1 ist einstückig. Die Bremsscheibe umfasst im wesentlichen ein Bremsband 2, ein Mittelteil 3 mit Öffnungen 4 zur Befestigung der Bremsscheibe 1 an einer nicht dargestellten Nabe und Streben 5, die das Mittelteil 3 mit dem Bremsband 2 verbinden.
Das Bremsband 2 und die Streben weisen eine so hohe Wärmeleitfähigkeit auf, dass ein Überhitzen des Bremsbelags, der Bremsflüssigkeit und der Bremsleitungen sicher vermieden wird.
Die Bremsscheibe 1 weist ferner Bohrungen 6 im Bremsband 2 auf, um eine bessere Kühlung, Reinigung und geringeres Gewicht zu schaffen. Selbstverständlich kann die erfindungsgemäße Bremsscheibe bzw. Scheibenbremse auf eine dem Fachmann bekannte Weise an der Vorder- bzw. Hinterradnabe kompatibel zu bisherigen Bremssystemen eingesetzt werden.

Die erfindungsgemäße Fahrradbremsscheibe zeigt eine hohe Wärmeleitfähigkeit und eine hohe Verschleißfestigkeit, wie sie beim Abbremsen von hohen Geschwindigkeiten über längere Zeiten wie beispielsweise bei langen Bergabfahrten im Gelände erforderlich sind. Weiterhin kann durch die guten Festigkeitswerte und die geringe Dichte des Materials das Gewicht der erfindungsgemäßen Fahrradbremsscheibe gegenüber den bekannten Fahrradbremsscheiben deutlich reduziert werden.

## Patentansprüche

1. Fahrradbremsscheibe (1), die starr mit der Nabe verbunden ist und die mit einem am Fahrrad befestigten Bremssattel in einen Reibeingriff bringbar ist, **dadurch gekennzeichnet, dass** sie
einen inneren ringförmigen Bereich (3) aufweist, der mit der Nabe form- und kraftschlüssig verbunden ist, und
einen äußeren ringförmigen Bereich (2) aufweist, wobei der innere und der äußere ringförmige Bereich (2, 3) durch Stege (5) verbunden sind und die Fahrradbremsscheibe (1) komplett aus Kompositmaterial aus einer Gewebestruktur, bestehend aus Silizium infiltrierten Kohlenstofffaser-Verbundmaterial gefertigt ist.

2. Fahrradbremsscheibe nach Anspruch 1, **dadurch gekennzeichnet, dass** das Kompositmaterial aus Endlosfasern mit einer Phasenverteilung von >60% C und 20-30% SiC besteht.

3. Fahrradbremsscheibe nach Anspruch 1 oder 2, **dadurch gekennzeichnet, dass** mindestens drei äquidistant angeordnete Stege (5) vorhanden sind.

4. Fahrradbremsscheibe nach Anspruch 3, **dadurch gekennzeichnet, dass** das Bremsband in integraler Bauweise durch äquidistant angeordnete Stege (5) in tangentialer Orientierung zur Nabenöffnung angeordnet sind.

5. Die Fahrradbremsscheibe nach Anspruch 1 bis 4, **dadurch gekennzeichnet, dass** die Bauweise differentiell oder integral dargestellt werden kann.

6. Fahrradbremsscheibe nach Anspruch 1 bis 5, **dadurch gekennzeichnet, dass** die Stege (5) im Übergangsbereich zum inneren ringförmigen Bereich (3) und im Übergangsbereich zum äußeren ringförmigen Bereich (2) verbreitert sind.

7. Fahrradbremsscheibe nach Anspruch 1 bis 6, **dadurch gekennzeichnet, dass** der äußere ringförmige Bereich (2) die gesamte Belagbreite im Laufe einer Umdrehung abdecken.

8. Fahrradbremsscheibe nach Anspruch 1 bis 7, **dadurch gekennzeichnet, dass** der äußere ringförmige Bereich (2) auf zwei Kreisbahnen angeordnete Öffnungen (6) aufweist, wobei die Öffnungen (6) der inneren Kreisbahn etwa mittig zu denen der äußeren Kreisbahn angeordnet sind.

9. Fahrradbremsscheibe nach Anspruch 1 bis 8, **dadurch gekennzeichnet, dass** der äußere ringförmige Bereich (2) mit einer beidseitigen Reibschicht bestehend aus SiC versehen ist.

10. Fahrradbremsscheibe nach Anspruch 1 bis 9, **dadurch gekennzeichnet, dass** die Bremsscheibe (1) eine Dicke von 1,5 bis 2,5 mm besitzt.
